# FASCICULE DE BREVET EUROPEEN

(11) **EP 3 022 713 B1**
(45) Date de publication et mention de la délivrance du brevet: **20.09.2017**
(21) Numéro de dépôt: 14738481.2
(22) Date de dépôt: 09.07.2014
(51) Int. Cl.: G06T 7/20, G01B 11/16

(54) **PROCÉDÉ DE MESURE MULTI-ÉCHELLES DE FORME, DE DÉPLACEMENT ET/OU DE DÉFORMATION D'UNE PIÈCE DE STRUCTURE SOUMISE À DES SOLLICITATIONS PAR CRÉATION D'UNE PLURALITÉ DE MOUCHETIS COLORIMÉTRIQUES**
MEHRSKALIGES VERFAHREN ZUR MESSUNG DER FORM, DER BEWEGUNG UND/ODER DER VERFORMUNG EINES BAUTEILS UNTER BELASTUNG DURCH ERZEUGUNG MEHRERER KOLORIMETRISCHER GESPRENKELTER MUSTER
MULTI-SCALE METHOD FOR MEASURING THE SHAPE, MOVEMENT AND/OR DEFORMATION OF A STRUCTURAL PART SUBJECTED TO STRESSES BY CREATING A PLURALITY OF COLORIMETRIC SPECKLED PATTERNS

(30) Priorité: 15.07.2013 FR 1356961
(43) Date de publication de la demande: 25.05.2016
(73) Titulaire: Airbus, 31700 Blagnac (FR); Centre National de la Recherche Scientifique, 75794 Paris Cedex 16 (FR); Ecole Normale Supérieure de Cachan, 94230 Cachan Cedex (FR)
(72) Inventeur: PETIOT, Caroline, F-91940 Les Ulis (FR); ROUX, Stéphane, F-93110 Rosny sous Bois (FR); HILD, François, F-92260 Chatenay Malabry (FR)
(74) Mandataire: Deschamps, Samuel
(86) Numéro de dépôt international: PCT/EP2014/064673
(87) Numéro de publication internationale: WO 2015/007581

(56) Documents cités:
- FR-A1- 2 842 591
- PHILIP SIEGMANN ET AL: "A simultaneous in- and out-of-plane displacement measurement method", OPTICS LETTERS, OPTICAL SOCIETY OF AMERICA, US, vol. 36, no. 1, 1 janvier 2011 (2011-01-01), pages 10-12, XP001559791, ISSN: 0146-9592, DOI: 10.1364/OL.36.000010
- ZONGHUA ZHANG ET AL: "Time efficient color fringe projection system for 3D shape and color using optimum 3-frequency Selection", OPTICS EXPRESS, vol. 14, no. 14, 1 janvier 2006 (2006-01-01), page 6444, XP055107719, ISSN: 1094-4087, DOI: 10.1364/OE.14.006444
- J P Chambard ET AL: "Comptes Rendus des JNC 16 - Toulouse 2009", , 20 mai 2009 (2009-05-20), XP055107721, Extrait de l'Internet: URL:http://hal.archives-ouvertes.fr/docs/0 0/38/57/70/PDF/126b.pdf [extrait le 2014-03-13]
- Fahrettin Ozturk ET AL: "Grid Marking and Measurement Methods for Sheet Metal Formability", , 18 juin 2009 (2009-06-18), XP055107727, Extrait de l'Internet: URL:http://www.hidrosekillendirme.com/docs /yayinlar/5_Grid_marking_and_measurement.p df [extrait le 2014-03-13]

## Description

### DOMAINE TECHNIQUE

L'invention concerne un procédé de mesure de forme, de déplacement et/ou de déformation d'une structure soumise à des sollicitations extérieures par création d'une pluralité de mouchetis. L'invention est plus particulièrement, mais non exclusivement, adaptée au domaine des techniques de mesures de déplacements et/ou de déformations d'une structure soumise à des sollicitations extérieures.

### ÉTAT DE LA TECHNIQUE

Selon l'art antérieur, la conception mécanique d'une pièce de structure peut mettre en oeuvre une technique d'imagerie permettant de connaître son comportement et ainsi de valider ou non le concept structural de ladite pièce de structure. Cette technique d'imagerie s'applique aussi à des éprouvettes de matériaux à des fins de caractérisations mécaniques. En conséquence, dans la suite, le terme générique de « pièce d'étude » recouvrira indifféremment des pièces de structures ou des éprouvettes, indépendamment de leur taille et de leur forme.

Le brevet FR2842591 décrit un procédé de mesure de déformations d'une pièce mécanique basée sur la corrélation d'image, la surface de ladite pièce comportant la projection optique d'un mouchetis et un autre mouchettis imprimé.

Ladite technique permet de mesurer des déplacements et des déformations de la pièce d'étude lorsque ladite pièce d'étude est soumise à des sollicitations extérieures, par exemple, mécaniques et/ou thermiques.

Plus précisément, ladite technique d'imagerie met en oeuvre un dispositif d'acquisition d'images numériques et un logiciel de corrélation d'images numériques. La pièce d'étude comporte une surface définie dans un repère objet (X, Y, Z). La surface de la pièce d'étude est marquée par un motif hétérogène, aléatoire ou non, appelé mouchetis, enregistré sous la forme d'une image en niveaux de gris. Ledit mouchetis est caractérisé par une longueur de corrélation, c'est-à-dire une échelle en-deçà de laquelle le marquage est persistant. La différence quadratique moyenne de marquage entre deux points dont la distance est inférieure ou égale à cette longueur de corrélation est petite devant la variance de niveaux de gris du mouchetis. En outre, la pièce d'étude comporte au moins une région d'intérêt devant être étudiée.

Le dispositif d'acquisition d'images numériques enregistre au moins une image numérique de référence de ladite surface. Ladite image numérique est divisée en pixels définis dans un repère image (X',Y'). Le marquage hétérogène de la surface de la structure créé par le mouchetis est alors rendu au niveau de l'image numérique par des niveaux de gris différents d'un pixel à l'autre. Un point P de la surface défini dans le repère objet (X, Y, Z) correspond donc à un pixel P' de l'image numérique de référence, défini dans le repère image (X',Y') et ayant un niveau de gris déterminé.

Une sollicitation extérieure est appliquée à la pièce d'étude. Ladite sollicitation déforme la pièce d'étude et notamment la surface étudiée. Le point P de la surface est ainsi déplacé lors de l'application des efforts en une position P". Le dispositif d'acquisition d'images numériques enregistre à intervalles réguliers une série d'images numériques de la pièce d'étude pendant l'application de la sollicitation extérieure, et l'analyse locale ou globale dite de corrélation d'images numériques permet d'accéder à un champ de déplacement défini en tout point d'une région d'intérêt à chaque niveau de sollicitation.

Une variante de cette technique, dite de stéréo-corrélation, permet la mesure de formes tridimensionnelles et de champs de déplacements tridimensionnels. Au moins deux images numériques de vues différentes de la pièce d'étude sont acquises à intervalles réguliers pendant l'application de la sollicitation extérieure. Ledit point P de la surface défini dans le repère objet (X, Y, Z) apparaitra dans chaque image numérique I au point P'i dans le repère de l'image numérique I. Après une étape d'étalonnage effectuée le plus souvent avec une mire de référence connue, la corrélation d'images numériques permet d'associer grâce au mouchetis les points P'i dans chaque image I. En effet, une étape d'étalonnage permet de déduire des coordonnées de chaque point P'i les coordonnées du point P dans le repère objet (X, Y, Z). En outre, les champs de déplacements permettent la détermination de vecteurs de déplacement tridimensionnels dans le repère objet (X, Y, Z) en tout point de la surface de la pièce d'étude.

Cependant, suivant l'échelle de la longueur de corrélation du mouchetis, les champs de déplacement et/ou de déformation sont plus ou moins précis, plus ou moins résolus spatialement, et la mesure du champ de déplacement et/ou du champ de déformation est plus ou moins coûteuse en temps de calculs. En effet, plus la longueur de corrélation du mouchetis est réduite, plus le calcul du champ de déplacement et/ou du champ de déformation est coûteux, et plus le champ de déplacement et/ou le champ de déformation est précis. Inversement, l'amplitude maximale des déplacements que la corrélation d'images sera capable de déterminer est de l'ordre de grandeur de la longueur de corrélation. Un mouchetis fin n'est donc pas robuste.

Un compromis entre résolution spatiale et incertitude doit donc être recherché en fonction de la précision souhaitée et de la robustesse du traitement. Soit l'opérateur choisit de privilégier les mesures globales en créant un mouchetis ayant de grandes longueurs de corrélation afin d'obtenir un champ de déplacement et/ou un champ de déformation relativement peu résolu spatialement, soit l'opérateur choisit de privilégier les mesures locales en créant un mouchetis ayant une faible longueur de corrélation afin d'obtenir un champ de déplacement et/ou de déformation précis et résolu spatialement mais nécessitant une bonne appréciation du déplacement initial.

### EXPOSÉ DE L'INVENTION

L'invention a notamment pour but de résoudre ce problème.

A cette fin, l'invention concerne un procédé de mesure de déplacement et/ou de déformation d'une pièce d'étude soumise à une sollicitation extérieure, tel que définit par la revendication 1. L'invention peut être mise en oeuvre selon les modes de réalisation avantageux exposés dans les revendications 2-7.

La présente invention concerne également un système de mesure de déplacement et/ou de déformation d'une pièce d'étude soumise à une sollicitation extérieure, tel que définit par la revendication 8.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un dispositif de mesure de déplacement et/ou déformation d'une pièce d'étude soumise à des sollicitations extérieures selon un exemple de réalisation de l'invention à l'aide d'un système de stéréocorrélation d'images à deux caméras fixes ;
- Figure 2 : un diagramme fonctionnel montrant différentes étapes du procédé selon un exemple de réalisation de l'invention ;
- Figure 3 : une représentation schématique de la surface d'une pièce d'étude comportant un premier mouchetis selon un exemple de réalisation de l'invention ;
- Figure 4 : une représentation schématique de la surface d'une pièce d'étude comportant un premier mouchetis et un second mouchetis selon un exemple de réalisation de l'invention ;
- Figure 5 : une représentation schématique d'une image numérique de la surface d'une pièce d'étude selon un exemple de réalisation de l'invention ;
- Figure 6 : une représentation schématique d'une image numérique de la surface d'une pièce d'étude après un premier filtrage selon un exemple de réalisation de l'invention ;
- Figure 7 : une représentation schématique d'une image numérique de la surface d'une pièce d'étude après un second filtrage selon un exemple de réalisation de l'invention.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

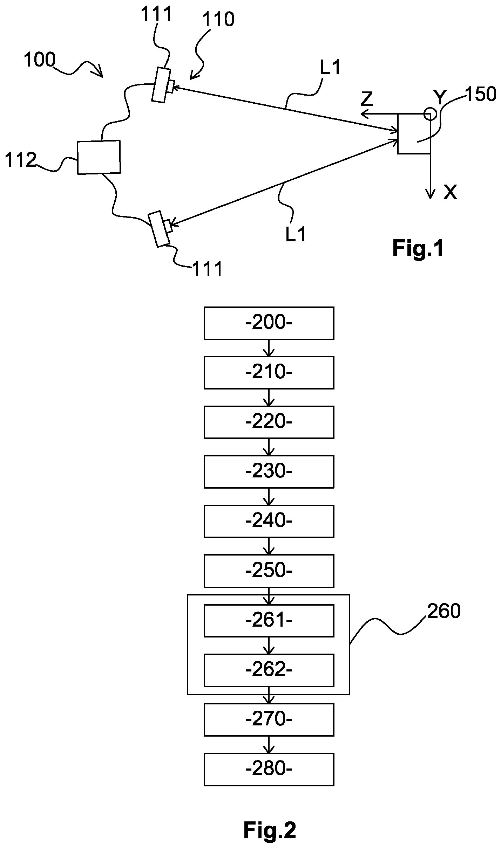

La figure 1 montre un dispositif de mesure 100 de déplacement et/ou déformation d'une pièce d'étude 150 soumise à des sollicitations extérieures. Dans un exemple, lesdites sollicitations extérieures sont des sollicitations mécaniques et/ou thermiques. La pièce d'étude comporte une surface définie dans un repère objet (X, Y, Z).

Dans un mode de réalisation, le dispositif de mesure 100 comporte un dispositif d'acquisition d'images numériques en couleurs 110 et des moyens de corrélation d'images tel qu'un logiciel de corrélation d'images. Dans un exemple, dans le cas d'une corrélation d'images numériques classique, le dispositif d'acquisition d'images numériques en couleurs 110 est un système comportant une caméra ou un appareil photographique 111 fixe. Dans un autre exemple, dans le cas d'une stéréocorrélation, le dispositif d'acquisition d'images numériques en couleurs 110 est un système comportant plusieurs caméras et/ou d'appareils photographiques 111. Chaque caméra et/ou appareil photographique 111 du dispositif d'acquisition d'images numériques en couleurs 110 comporte des capteurs photosensibles, c'est-à-dire un composant électronique servant à convertir un rayonnement électromagnétique en un signal électrique analogique.

Le dispositif d'acquisition d'images numériques en couleurs 110 comporte en outre un ou plusieurs filtres associés à chaque caméra et/ou appareil photographique 111. Dans un exemple, chaque filtre est positionné devant l'objectif de la caméra ou l'appareil photographique 111 associé.

Dans un autre exemple, chaque capteur comporte une matrice de photosites et un filtre de couleur comportant des cellules colorées. Chaque photosite comporte une photodiode sensible à l'ensemble du spectre de la lumière visible. Chaque cellule est associée à un photosite. Dans un exemple, le filtre est un filtre de Bayer et un groupe de quatre photosites adjacents deux à deux comporte un premier photosite associé à une cellule de couleur rouge, un deuxième photosite associé à une cellule de couleur bleue, les deux derniers photosites étant associés à une cellule de couleur verte. Dans un autre exemple, le dispositif d'acquisition d'images numériques en couleurs 110 comporte des caméras multispectrales, chacune comportant un capteur essentiellement monochrome et un filtre permettant l'acquisition de l'image sur plusieurs intervalles de longueur d'onde.

Le dispositif d'acquisition d'images numériques en couleurs 110 comporte en outre un module 112 permettant de traiter les signaux électriques analogiques afin d'obtenir une image numérique.

Dans une étape 200, le dispositif d'acquisition d'images numériques en couleurs 110 est positionné de sorte que les mesures de déplacement et/ou de déformation soient optimales (cf. figure 2).

Dans une étape 210, un opérateur crée un premier mouchetis 300 sur la surface de la pièce d'étude 150.

Un mouchetis est un motif hétérogène, aléatoire ou non, créé sur la surface de la pièce d'étude.

Dans un exemple, le motif est déposé, peint ou créé par projection de gouttes de peinture sur la surface de la pièce d'étude. Ledit motif comporte un ensemble de motifs irréguliers, c'est-à-dire, par exemple, un ensemble de taches différentes les unes des autres en taille, en forme et/ou en orientation mais dont la taille ainsi que la distance entre deux taches voisines sont d'un ordre de grandeur comparable assimilé ici à la longueur de corrélation.

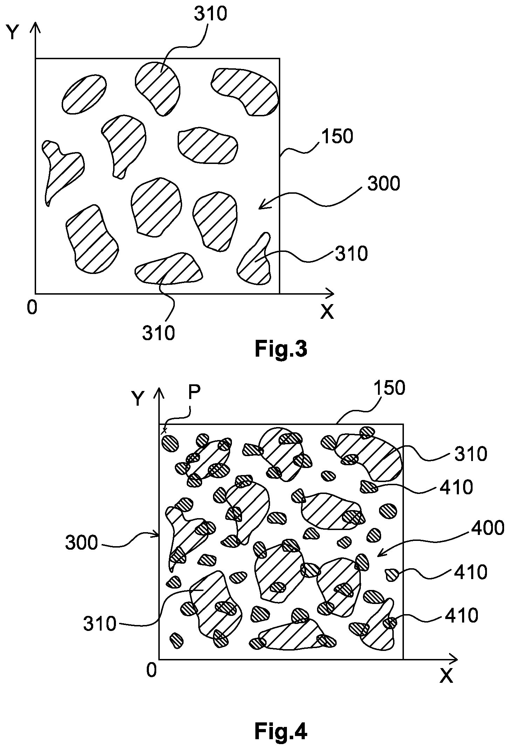

La figure 3 montre ledit premier mouchetis 300, qui comporte une pluralité de taches 310. Ce premier mouchetis 300 est associé à une première longueur de corrélation et une première couleur.

Le terme couleur désigne une pluralité de caractéristiques locales attribuées au même point de la surface de la pièce d'étude, correspondant à la réponse dudit point à une longueur d'onde de la source lumineuse.

Dans une étape 220, l'opérateur crée un second mouchetis 400 sur la surface de la pièce d'étude 150 (cf. figure 4). Ledit second mouchetis 400 comporte une pluralité de taches 410. Ce second mouchetis 400 est associé à une seconde longueur de corrélation et une seconde couleur. La seconde longueur de corrélation est différente de la première longueur de corrélation et la seconde couleur est différente de la première couleur. Dans un exemple, la seconde longueur de corrélation est inférieure à la première longueur de corrélation.

En variante, la surface de la pièce d'étude 150 comporte une texture ayant naturellement un premier mouchetis 300 associé à une première longueur de corrélation et une première couleur, ainsi qu'un second mouchetis 400 associé à une seconde longueur de corrélation différente de la première longueur de corrélation et une seconde couleur différente de la première couleur.

La création ou l'existence naturelle de plusieurs mouchetis 300 et 400 ayant des longueurs de corrélation et des couleurs différentes permet, après acquisition et traitement d'images numériques de la surface de la pièce d'étude 150 de mesurer, en fonction du type de mesure que l'opérateur souhaite effectuer, un ou plusieurs champs de déplacement et/ou de déformation plus ou moins résolu spatialement.

La capacité à moduler les plus petites échelles de corrélation spatiale par un filtre agissant sur le codage couleur de l'image couleur est une spécificité de l'invention qui permet d'ajuster à volonté la robustesse de la mesure et sa finesse de description spatiale. Le même filtrage peut être réalisé par des moyens optiques conventionnels au travers d'une pluralité d'images, ou bien par le biais de filtres chromatiques étroits, comme pour l'imagerie hyperspectrale.

Dans un exemple de mise en oeuvre, l'opérateur réalise un premier mouchetis 300 à partir d'une bombe de peinture rouge et d'une bombe de peinture blanche. Ensuite, ledit opérateur crée le second mouchetis 400 en ajoutant des taches de peinture bleue à l'aide d'un pinceau ou d'un pochoir. La première couleur correspond alors à une longueur d'onde supérieure ou égale à 620 nanomètres, alors que la longueur d'onde du second mouchetis est essentiellement inférieure à 500 nanomètres. Dans cet exemple, la longueur de corrélation du premier mouchetis est dix fois supérieure à la longueur de corrélation du second mouchetis.

D'autres mouchetis sont créés en fonction des souhaits de l'opérateur et de la capacité du dispositif d'acquisition d'images numériques en couleurs 110, en particulier de la définition dudit dispositif d'acquisition d'images numériques en couleurs 110, et du module 112 à séparer les couleurs et les dimensions.

Dans une étape 230, le dispositif d'acquisition d'images numériques en couleurs 110 enregistre une image numérique de référence 500 en couleurs de la surface de la pièce d'étude 150.

Dans une étape 240, une sollicitation extérieure est appliquée à la pièce d'étude 150. Ladite sollicitation déforme la pièce d'étude et notamment la surface étudiée. Un point P de la surface est déplacé lors de l'application des efforts mécaniques en une position finale de coordonnées non connues dans le repère objet (X, Y, Z). Les taches 310 du premier mouchetis 300 et les taches 410 du second mouchetis 400 sont donc déplacées et déformées. Dans une étape 250, le dispositif d'acquisition d'images numériques en couleurs 110 enregistre à intervalles réguliers une série d'images numériques 500 en couleurs de la surface de la pièce d'étude 150 pendant l'application de la sollicitation mécanique et/ou thermique. Chaque image numérique 500 en couleurs est divisée en pixels P' définis dans un repère image (X', Y'). Le point P de la surface de la pièce d'étude 150 défini dans le repère objet (X, Y, Z) correspond donc à un pixel P', pour chaque image numérique 500 en couleurs, défini dans le repère image (X', Y'). En outre, chaque pixel P' de chaque image numérique 500 comporte une couleur.

Une image numérique en couleurs peut résulter de l'agrégation d'une pluralité d'images numériques acquises successivement, par exemple avec des sources lumineuses différentes, ou bien être acquises simultanément lorsque le dispositif d'acquisition d'image numérique en couleurs 110 comporte une matrice de capteurs dispose de sites de sensibilités différentes. Les traitements colorimétriques ou chromatiques évoqués ci-après englobent tous les traitements numériques exploitant cette pluralité d'information à fin d'en extraire plusieurs images en « niveaux de gris » ayant des caractéristiques géométriques différentes, liées aux mouchetis, mais sans altération de la position des pixels.

Il ne s'agit pas nécessairement d'isoler spécifiquement une couleur ou un mouchetis, mais de démontrer la capacité de supprimer les hautes fréquences spatiales de l'image filtrée sur une gamme prédéfinie pour atteindre une meilleure robustesse.

Cette couleur est codée en niveaux de rouge, de vert et de bleu (RGB selon l'acronyme anglo-saxon de red-green-blue). Ainsi, chaque couleur s'exprime comme une combinaison de ces trois couleurs. En variante, la couleur est codée à partir d'un format de codage différent, par exemple en niveaux de cyan, magenta, jaune, noir pour la quadrichromie (CMYK selon l'acronyme anglo-saxon de cyan-magenta-yellow-key), ou une résolution spectrale beaucoup plus fine pour les caméras multispectrales ou hyperspectrales. Des taches 510 correspondant aux taches 310 du premier mouchetis 300 et des taches 520 correspondant aux taches 410 du second mouchetis 400 apparaissent donc sur chaque image numérique 500 en couleurs.

Dans une étape 260, le logiciel de corrélation d'images traite les images numériques 500 en couleurs enregistrées par le dispositif d'acquisition d'images numériques en couleurs 110 à l'étape 230 d'enregistrement de l'image numérique 500 de référence en couleurs et à l'étape 250 d'enregistrement d'une série d'images numériques 500 en couleurs. Le traitement des images numériques 500 en couleurs comporte des étapes de filtrage colorimétrique des images numériques 500 en couleurs afin de séparer les couleurs des images numériques.

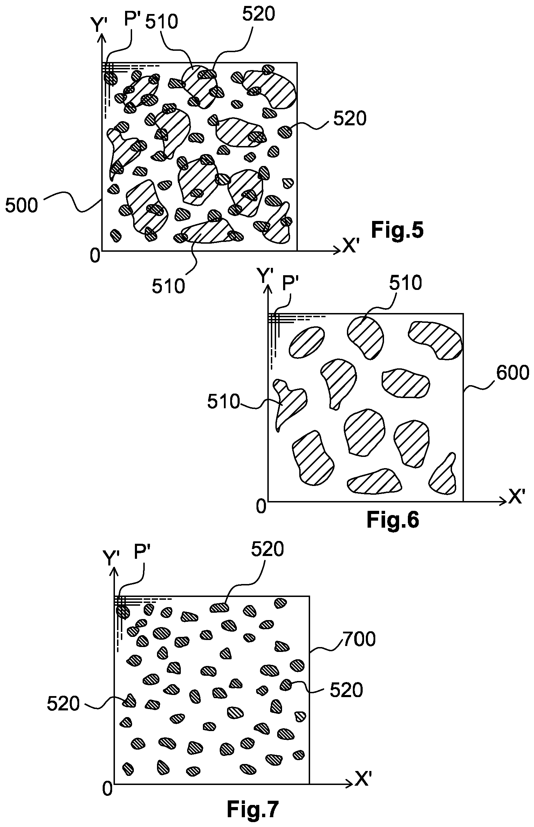

Plus précisément, dans une sous-étape 261, un premier filtrage colorimétrique est effectué à partir de chaque image numérique 500 en couleurs afin d'extraire les pixels ayant un niveau, par exemple, de rouge de vert et de bleu correspondant à la première plage de couleur. A la fin de cette sous-étape 261, une première série d'images numériques filtrées 600 comportant uniquement les taches 510 correspondant aux taches 310 du premier mouchetis 300 est obtenue (cf. figure 6).

Dans une sous-étape 262, un second filtrage colorimétrique est effectué à partir de chaque image numérique 500 en couleurs afin d'extraire les pixels ayant un niveau, par exemple, de rouge, de vert et de bleu correspondant à la seconde couleur. A la fin de cette sous-étape 262, une seconde série d'images numériques filtrées 700 comportant uniquement les taches 520 correspondant aux taches 410 du second mouchetis 400 est obtenue (cf. figure 7).

Dans une étape 270, le logiciel de corrélation d'images détermine à partir de la première série d'images numériques filtrées 600 un premier champ de déplacement et/ou un premier champ de déformation. Dans le cas de la stéréovision, la corrélation d'images permet également de déterminer une forme tridimensionnelle globale.

Dans une étape 280, le logiciel de corrélation d'images détermine à partir de la seconde série d'images numériques filtrées 700 un second champ de déplacement et/ou un second champ de déformation. Dans un mode de réalisation, le premier champ de déplacement et/ou premier champ de déformation est utilisé comme information préalable. Dans le cas de la stéréovision, la forme tridimensionnelle est affinée. A noter que ce traitement peut être réalisé sur une région limitée de la surface examinée qui présente un intérêt spécifique.

La création de plusieurs mouchetis dont les longueurs de corrélation et les couleurs sont différentes permet ainsi, après acquisition et traitement d'images numériques en couleurs de la surface de la pièce d'étude 150 de créer, en fonction du type de mesure que l'opérateur souhaite effectuer, d'un ou plusieurs champs de déplacement et/ou déformation plus ou moins résolu spatialement.

En effet, si l'opérateur veut effectuer une mesure locale de déplacement au niveau de la périphérie de la zone d'introduction d'une sollicitation extérieure afin de vérifier la qualité et/ou l'homogénéité de la sollicitation extérieure et, ainsi, vérifier les conditions aux limites, ou si l'opérateur veut effectuer une mesure locale de déplacement et de déformation sur la pièce d'étude 150 afin de déterminer un endommagement au niveau d'un élément de structure de la pièce d'étude 150 comme par exemple, un arrêt de raidisseur, une liaison collée, soudée ou boulonnée, ou une dégressivité d'épaisseur, ledit opérateur utilise le champ de déplacement créé à partir de la série d'images numériques filtrées 600, 700 sur lesquelles les taches 510, 520 dont la surface est comprise dans la plage de valeur la plus élevée apparaissent.

En outre, si l'opérateur veut effectuer une mesure de déplacement et de déformation sur l'ensemble de la pièce d'étude 150, ou sur une large zone de la pièce d'étude 150, afin de déterminer l'existence et de quantifier certains phénomènes d'instabilité de la pièce d'étude 150, tels que le flambage ou le post-flambage, ledit opérateur utilise le champ de déplacement et le champ de déformation créés à partir de la série d'images numériques filtrées 600, 700 sur lesquelles les taches 510, 520 dont la surface est comprise dans la plage de valeur la moins élevée apparaissent.

De plus, l'opérateur peut utiliser en parallèle les champs de déplacement et/ou de déformation créés à partir de chaque série d'images numériques filtrées 600, 700.

## Revendications

1. Procédé de mesure de déplacement et/ou de déformation d'une pièce d'étude (150) soumise à une sollicitation extérieure, la surface de ladite pièce d'étude comportant une texture ayant naturellement un premier mouchetis comportant une première couleur et un second mouchetis comportant une seconde couleur différente de la première couleur, le premier mouchetis comportant une première longueur de corrélation et le second mouchetis comportant une seconde longueur de corrélation différente de la première longueur de corrélation, ledit procédé mettant en oeuvre un dispositif d'acquisition d'images numériques en couleurs (110) et des moyens de corrélation d'images, comportant les étapes suivantes :
• acquisition (250) d'une pluralité d'images numériques (500) en couleurs de la surface de la pièce d'étude (150) au moyen du dispositif d'acquisition d'images numériques en couleurs (110) pendant l'application d'une sollicitation extérieure sur ladite pièce d'étude (150),
• traitement (260) des images numériques (500) en couleurs acquises à l'étape d'acquisition (250) d'une pluralité d'images numériques (500) en couleurs, ce qui fournit des séries d'images numériques traitées, chacune mettant en évidence des détails contrastés sur des échelles variables,
• corrélation (270, 280) de l'ensemble des images numériques traitées de chaque série pour déterminer les champs de déplacement aux échelles associées à chaque traitement (260).

2. Procédé selon la revendication 1, **caractérisé en ce que** la seconde longueur de corrélation est inférieure à la première longueur de corrélation.

3. Procédé selon l'une des revendications 1 à 2, **caractérisé en ce que** l'étape de traitement (260) des images numériques (500) en couleurs comporte :
• une sous-étape (261) de premier filtrage colorimétrique des images numériques (500) en couleurs afin d'obtenir une première série d'images numériques filtrées (600) comportant uniquement le premier mouchetis (300) ;
• une sous-étape (262) de second filtrage colorimétrique des images numériques (500) en couleurs afin d'obtenir une seconde série d'images numériques filtrées (700) comportant uniquement le second mouchetis (400).

4. Procédé selon l'une des revendications 1 à 2, **caractérisé en ce que** l'étape de traitement (260) des images numériques (500) en couleurs comporte :
• une sous-étape (261) de premier filtrage colorimétrique des images numériques (500) en couleurs afin d'obtenir une première série d'images numériques filtrées (600) comportant uniquement le premier mouchetis (300) ;
• une sous-étape (262) de second filtrage colorimétrique des images numériques (500) en couleurs afin d'obtenir une seconde série d'images numériques filtrées (700) comportant le premier mouchetis (300) et le second mouchetis (400).

5. Procédé selon la revendication 3 ou 4, **caractérisé en ce qu'**il comporte en outre une étape (270) de détermination d'un premier champ de déplacement et/ou d'un premier champ de déformation à partir de la première série d'images numériques filtrées (600).

6. Procédé selon la revendication 4 ou 5 **caractérisé en ce qu'**il comporte en outre une étape (280) de détermination d'un second champ de déplacement et/ou d'un second champ de déformation à partir de la seconde série d'images numériques filtrées (700).

7. Procédé selon la revendication 6, **caractérisé en ce que** l'étape (280) de détermination d'un second champ de déplacement et/ou d'un second champ de déformation est initialisée par le premier champ de déplacement et/ou le premier champ de déformation.

8. Système de mesure de déplacement et/ou de déformation d'une pièce d'étude (150) soumise à une sollicitation extérieure, la surface de ladite pièce d'étude comportant une texture ayant naturellement un premier mouchetis comportant une première couleur et un second mouchetis comportant une seconde couleur différente de la première couleur, le premier mouchetis comportant une première longueur de corrélation et le second mouchetis comportant une seconde longueur de corrélation différente de la première longueur de corrélation, ledit système comportant des moyens pour :
• acquérir (250) une pluralité d'images numériques (500) en couleurs de la surface de la pièce d'étude (150) au moyen du dispositif d'acquisition d'images numériques en couleurs (110) pendant l'application d'une sollicitation extérieure sur ladite pièce d'étude (150),
• traiter (260) des images numériques (500) en couleur acquises à l'étape d'acquisition (250) d'une pluralité d'images numériques en couleurs (500), ce qui fournit des séries d'images numériques traitées, chacune mettant en évidence des détails contrastés sur des échelles variables, et
• corréler (270, 280) l'ensemble des images numériques traitées de chaque série pour déterminer les champs de déplacement aux échelles associées à chaque traitement (260),

## Patentansprüche

1. Verfahren zur Messung der Bewegung und/oder der Verformung eines Untersuchungsbauteils (150), das einer externen Belastung ausgesetzt wird, wobei die Oberfläche des Untersuchungsbauteils eine Textur aufweist, die natürlicherweise ein erstes gesprenkeltes Muster mit einer ersten Farbe und ein zweites gesprenkeltes Muster mit einer zweiten Farbe aufweist, die sich von der ersten Farbe unterscheidet, wobei das erste gesprenkelte Muster eine erste Korrelationslänge und das zweite gesprenkelte Muster eine zweite Korrelationslänge aufweist, die sich von der ersten Korrelationslänge unterscheidet, wobei das Verfahren ein Gerät zum Erfassen von digitalen Farbbildern (110) und Bildkorrelationsmittel einsetzt, umfassend die folgenden Schritte:
• Erfassen (250) von mehreren digitalen Farbbildern (500) von der Oberfläche des Untersuchungsbauteils (150) mittels des Geräts zum Erfassen von digitalen Farbbildern (110) während des Aufbringens von einer externen Belastung auf das Untersuchungsbauteil (150),
• Verarbeiten (260) der digitalen Farbbilder (500), die bei dem Schritt des Erfassens (250) von mehreren digitalen Farbbildern (500) erfasst werden, was Reihen von verarbeiteten digitalen Bildern bereitstellt, wobei jede kontrastreiche Details auf verschiedenen Skalen hervorhebt,
• Korrelieren (270, 280) der Gesamtheit der verarbeiteten digitalen Bilder von jeder Reihe, um die Bewegungsfelder auf den Skalen, die mit jedem Verarbeiten (260) verbunden sind, zu bestimmen.

2. Verfahren nach Anspruch 1, **dadurch gekennzeichnet, dass** die zweite Korrelationslänge kleiner als die erste Korrelationslänge ist.

3. Verfahren nach einem der Ansprüche 1 bis 2, **dadurch gekennzeichnet, dass** der Schritt des Verarbeitens (260) der digitalen Farbbilder (500) Folgendes aufweist:
• einen Unterschritt (261) eines ersten kolorimetrischen Filterns der digitalen Farbbilder (500), um eine erste Reihe von gefilterten digitalen Bildern (600) zu erhalten, die nur das erste gesprenkelte Muster (300) aufweisen;
• einen Unterschritt (262) eines zweiten kolorimetrischen Filterns der digitalen Farbbilder (500), um eine zweite Reihe von gefilterten digitalen Bildern (700) zu erhalten, die nur das zweite gesprenkelte Muster (400) aufweisen.

4. Verfahren nach einem der Ansprüche 1 bis 2, **dadurch gekennzeichnet, dass** der Schritt des Verarbeitens (260) der digitalen Farbbilder (500) Folgendes aufweist:
• einen Unterschritt (261) eines ersten kolorimetrischen Filterns der digitalen Farbbilder (500), um eine erste Reihe von gefilterten digitalen Bildern (600) zu erhalten, die nur das erste gesprenkelte Muster (300) aufweisen;
• einen Unterschritt (262) eines zweiten kolorimetrischen Filterns der digitalen Farbbilder (500), um eine zweite Reihe von gefilterten digitalen Bildern (700) zu erhalten, die das erste gesprenkelte Muster (300) und das zweite gesprenkelte Muster (400) aufweisen.

5. Verfahren nach Anspruch 3 oder 4, **dadurch gekennzeichnet, dass** es ferner einen Schritt (270) des Bestimmens von einem ersten Bewegungsfeld und/oder einem ersten Verformungsfeld ausgehend von der ersten Reihe von gefilterten digitalen Bildern (600) aufweist.

6. Verfahren nach Anspruch 4 oder 5, **dadurch gekennzeichnet, dass** es ferner einen Schritt (280) des Bestimmens von einem zweiten Bewegungsfeld und/oder einem zweiten Verformungsfeld ausgehend von der zweiten Reihe von gefilterten digitalen Bildern (700) aufweist.

7. Verfahren nach Anspruch 6, **dadurch gekennzeichnet, dass** der Schritt (280) des Bestimmens von einem zweiten Bewegungsfeld und/oder einem zweiten Verformungsfeld durch das erste Bewegungsfeld und/oder das erste Verformungsfeld initialisiert wird.

8. System zur Messung der Bewegung und/oder der Verformung eines Untersuchungsbauteils (150), das einer externen Belastung ausgesetzt wird, wobei die Oberfläche des Untersuchungsbauteils eine Textur aufweist, die natürlicherweise ein erstes gesprenkeltes Muster mit einer ersten Farbe und ein zweites gesprenkeltes Muster mit einer zweiten Farbe aufweist, die sich von der ersten Farbe unterscheidet, wobei das erste gesprenkelte Muster eine erste Korrelationslänge und das zweite gesprenkelte Muster eine zweite Korrelationslänge aufweist, die sich von der ersten Korrelationslänge unterscheidet, wobei das System Mittel aufweist, um:
• mehrere digitale Farbbilder (500) von der Oberfläche des Untersuchungsbauteils (150) mittels des Geräts zum Erfassen von digitalen Farbbildern (110) während des Aufbringens von einer externen Belastung auf das Untersuchungsbauteil (150) zu erfassen (250),
• digitale Farbbilder (500), die bei dem Schritt des Erfassens (250) von mehreren digitalen Farbbildern (500) erfasst werden, was Reihen von verarbeiteten digitalen Bildern bereitstellt, wobei jede kontrastreiche Details auf verschiedenen Skalen hervorhebt, zu verarbeiten (260), und
• die Gesamtheit der verarbeiteten digitalen Bilder von jeder Reihe zu korrelieren (270, 280), um die Bewegungsfelder auf den Skalen, die mit jedem Verarbeiten (260) verbunden sind, zu bestimmen.

## Claims

1. Method for measuring movement and/or deformation of a study part (150) subjected to an external stress, the surface of said study part comprising a texture naturally having a first speckled pattern comprising a first color and a second speckled pattern comprising a second color different from the first color, the first speckled pattern comprising a first correlation length and the second speckled pattern comprising a second correlation length different from the first correlation length, said method implementing a color digital image acquisition device (110) and image correlation means, comprising the following steps:
• acquisition (250) of a plurality of color digital images (500) of the surface of the study part (150) by means of the color digital image acquisition device (110) during the application of an external stress on said study part (150),
• processing (260) of the color digital images (500) acquired in the step of acquisition (250) of a plurality of color digital images (500), which provides series of processed digital images, each highlighting contrasting details on variable scales,
• correlation (270, 280) of all of the processed digital images of each series to determine the fields of movement on the scales associated with each processing operation (260) .

2. Method according to Claim 1, **characterized in that** the second correlation length is less than the first correlation length.

3. Method according to either of Claims 1 and 2, **characterized in that** the step of processing (260) of the color digital images (500) comprises:
• a substep (261) of first colorimetric filtering of the color digital images (500) in order to obtain a first series of filtered digital images (600) comprising only the first speckled pattern (300);
• a substep (262) of second colorimetric filtering of the color digital images (500) in order to obtain a second series of filtered digital images (700) comprising only the second speckled pattern (400).

4. Method according to either of claims 1 and 2, **characterized in that** the step of processing (260) of the color digital images (500) comprises:
• a substep (261) of first colorimetric filtering of the color digital images (500) in order to obtain a first series of filtered digital images (600) comprising only the first speckled pattern (300);
• a substep (262) of second colorimetric filtering of the color digital images (500) in order to obtain a second series of filtered digital images (700) comprising the first speckled pattern (300) and the second speckled pattern (400).

5. Method according to Claim 3 or 4, **characterized in that** it further comprises a step (270) of determination of a first field of movement and/or of a first field of deformation from the first series of filtered digital images (600).

6. Method according to Claim 4 or 5, **characterized in that** it further comprises a step (280) of determination of a second field of movement and/or of a second field of deformation from the second series of filtered digital images (700).

7. Method according to Claim 6, **characterized in that** the step (280) of determination of a second field of movement and/or of a second field of deformation is initialized by the first field of movement and/or the first field of deformation.

8. System for measuring movement and/or deformation of a study part (150) subjected to an external stress, the surface of said study part comprising a texture naturally having a first speckled pattern comprising a first color and a second speckled pattern comprising a second color different from the first color, the first speckled pattern comprising a first correlation length and the second speckled pattern comprising a second correlation length different from the first correlation length, said system comprising means for:
• acquiring (250) a plurality of color digital images (500) of the surface of the study part (150) by means of the color digital image acquisition device (110) during the application of an external stress on said study part (150),
• processing (260) color digital images (500) acquired in the step of acquisition (250) of a plurality of color digital images (500), which provides series of processed digital images, each highlighting contrasting details on variable scales, and
• correlating (270, 280) all of the processed digital images of each series to determine the fields of movement on the scales associated with each processing operation (260) .
